# EUROPEAN PATENT APPLICATION

(11) **EP 1 777 437 A1**
(43) Date of publication of application: **25.04.2007**
(21) Application number: 06021803.9
(22) Date of filing: 18.10.2006
(51) Int. Cl.: F16F 15/124, F16H 55/30, F16H 55/14

(54) **Motion transmission system with sprocket supported by elastic anti-jerk elements**

(30) Priority: 20.10.2005 IT MI20051994
(71) Applicant: Sunstar Logistic Singapore Pte Ltd, Singapore 117684 (SG)
(72) Inventor: Greppi, Bruno, 22036 Erba CO (IT); Brioschi, Cesare, 23851 Galbiate LC (IT)
(74) Representative: Faraggiana, Vittorio

(57) **Abstract**

A motion transmission system for motor vehicles, comprising a motion transmission sprocket (12) between a shaft (13) to which the sprocket is connected and a circulating element (17) engaged on the periphery of the sprocket, the sprocket being provided with a plurality of axial seats (16) each suitable for receiving an axial pin (14) for fixing the sprocket to the shaft, between each pin and the wall of the respective seat there being interposed an annular elastic deformable anti-jerk element (15) fitted on the pin, characterized in that the extension of the seats in a tangential direction with respect to the sprocket is greater than the extent of the seats in a radial direction, each seat being tapered from the center to the periphery of the seat in the tangential directions.

## Description

The present invention relates to a motion transmission system, in particular for motor vehicles, provided with a sprocket supported by elastic anti-jerk elements. More in particular, the invention relates to an innovative motion transmission sprocket.

It has been known that for some time in the field of motorcycles motion transmission systems have been realized comprising a motion transmission sprocket for transmitting motion between a shaft to which the sprocket is fixed and a chain that engages on the periphery of the sprocket.

The sprocket is typically fixed to the shaft by means of axial pins that are integral with the shaft and are received in suitable seats in the sprocket, arranged circumferally with respect to the sprocket.

In the event of sudden pulls on the chain (due, for example, to sudden violent braking or sudden accelerations), nevertheless, the sprocket and the other components of the transmission system may suffer excessively great stress, which over time may damage the transmission and possibly shorten the working life thereof.

In an attempt to avoid this drawback, it has been proposed to support the sprocket with annular elastic anti-jerk elements, which are fitted on the supporting pins that are integral with the rotation shaft.

In known systems, each anti-jerk element has a circular cylindrical shape and is received in a respective axial seat of the sprocket, which is also circular in shape. The elastic anti-jerk elements completely occupy the respective seats.

In the event of sudden acceleration or deceleration, the elastic element is compressed between the supporting pin and the internal wall of the seat, absorbing part of the energy of the jerk, in such a way as to reduce in some way the stress imparted to the sprocket and to the rest of the transmission.

However, such a damping system is not able to limit in a satisfactory manner stress in the event of very sharp and repeated jerks, so that the transmission components continue to suffer due to the excessive mechanical stress and are subject to rapid wear. In fact, the elastic bushes to be fitted to the pin must have a relatively limited thickness, in order not to cause instability in the sprocket and misalignment thereof with respect to the rotation axis of the shaft.

The general object of the present invention is to overcome the aforementioned drawbacks by providing a motion transmission system that is able to bear in a satisfactory manner the great mechanical stress due to sudden acceleration or deceleration, without being subject to rapid wear.

A further object of the invention is to provide a transmission system that enables satisfactory stability of the positioning of the sprocket to be obtained.

In view of this object, it has been decided to realize a motion transmission system for motor vehicles according to the invention comprising a sprocket for transmitting motion between a shaft to which the sprocket is fitted and a circulating element engaged on the periphery of the sprocket, the sprocket being provided with a plurality of axial seats each suitable for receiving an axial pin for fixing the sprocket to the shaft, between each pin and the wall of the respective seat there being interposed an annular elastically deformable anti-jerk element fitted on the pin, characterized in that the extent of the seats in a tangential direction with respect to the sprocket is greater than the extent of the seats in a radial direction, each seat being tapered from the center to the periphery of the seat in the tangential directions.

In order to make clearer the explanation of the innovative principles of the present invention and the advantages thereof with respect to the prior art, with the help of the attached drawings a possible embodiment will be disclosed as an example applying such principles. In the drawings:
- figure 1 shows a view of a transmission system according to the present invention,
- figure 2 is an elastic anti-jerk element received in the respective seat, in a condition of absence of torque transmitted by the sprocket,
- figure 3 is the elastic anti-jerk element of the preceding figure received in the respective seat, in a condition of torque transmitted by the sprocket,
- figure 4 is a section view according to plane IV-IV shown in figure 1.

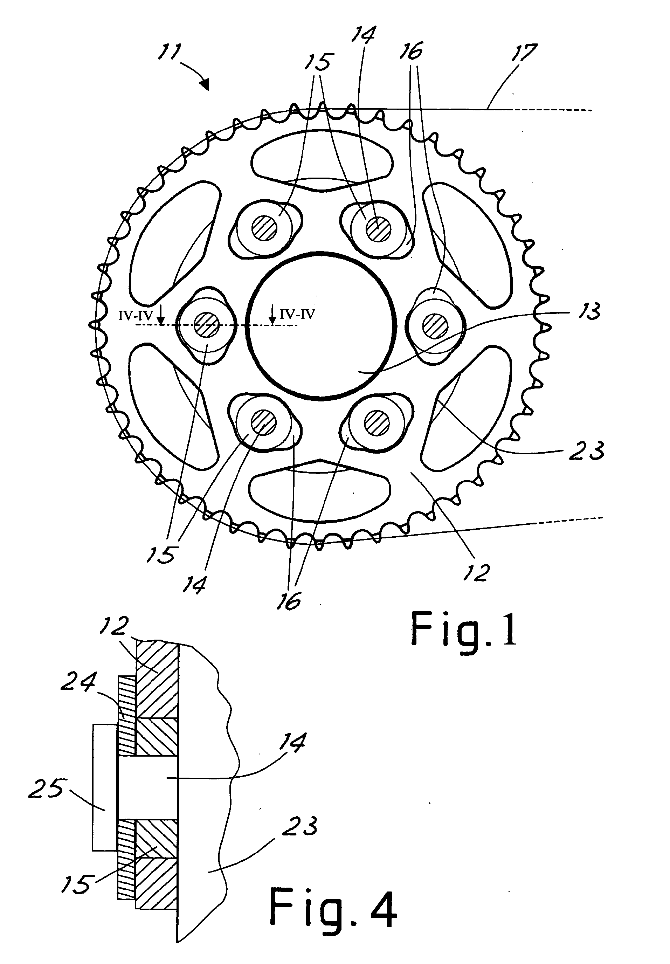

With reference to the figures, in figure 1 there shown a motion transmission system 11, intended in particular for use in the motorcycle field.

The system 11 comprises a motion transmission sprocket 12 between a shaft 13 to which the former is fixed and a circulating element 17 engaged on the periphery of the sprocket (for example a chain or also a belt shown schematically in the figure).

The sprocket 12 is provided with a plurality of axial seats 16, each suitable for receiving an axial pin 14, that is integral with the shaft, intended for supporting the sprocket and fixing it to the shaft. The pins 14, according to the prior art, protrude from a hub 23 fixed to the rotation shaft 13. It should be noted that by "shaft" a general rotating element is intended here, which could be the shaft rotated by the engine of the motorcycle but also a wheel.

The pins 14 are cylindrical in shape and could be six, arranged in six corresponding seats that are spaced regularly along a circumference concentric to the sprocket, according to known prior-art teachings.

Between each pin 14 and the wall of the respective seat there is interposed an annular elastically deformable anti-jerk element 15, which is fitted on the supporting pin 14.

In an embodiment of the invention, the anti-jerk elements 15 have a circular cylindrical shape, and have a coaxial hole for receiving the pin 14.

In the cross-section view in figure 4 there is shown the head 25 of the pin that provides a fixture in the axial direction between the pin and sprocket 12. The head 25 can be made in different ways according to the prior art. Between the head 25 and the side wall of the sprocket and of the elastic element 15 there can be interposed a washer 24.

According to the invention, the extent of the seats 16 in a direction that is tangential to the sprocket is greater than the extent of the seats in a radial direction, and the seat is tapered from the center to the periphery in the tangential directions. As will be explained below, this particular shape of the seat enables the absorption of energy to be considerably improved in the event of sudden jerks transmitted from the chain to the shaft or vice versa, safeguarding the wholeness of the transmission components and without compromising the positioning stability of the sprocket.

Advantageously, the seat has a generally elliptic shape. "Generally elliptic" is defined as a shape that is free of corners that resembles that of an ellipse, but is not necessarily perfectly elliptical (for example also ovoid, oblong or similar).

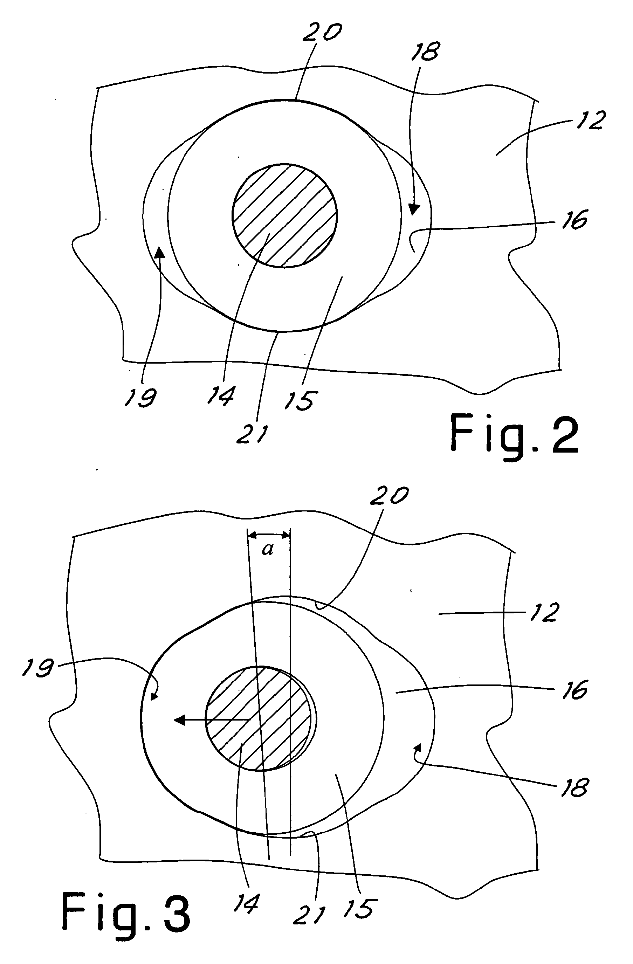

In the example in figure 3, the seats 16 comprise two circle arc walls 20 and 21, that are concentric to one another, are arranged in a radial direction on opposite sides of the anti-jerk element 15 and having a radius that is the same as that of the anti-jerk element 15.

Between the two circle arc walls 20, 21, the seat 16 has two concave walls, which are also a circle arc with a radius that is less than that of the anti-jerk element and with a center that is staggered with respect to the center of the seat so as to make the seat oblong in the tangential direction. These two walls define two portions 18, 19 that are not occupied by the deformable element in the absence of the torque transmitted by the sprocket.

The portions 18, 19 are shaped in such a way as to enable wedging of the deformable element 15 in the transmission condition of preset torque on the sprocket 12. Preferably, the radius of the arc disclosed by the portions 18, 19 is greater than the radius of the pin 14, so as to promote wedging.

In figure 2 there is shown the anti-jerk element 15 in the respective seat, in absence of torque transmitted by the sprocket 12. In this condition, the anti-jerk element 15 is undeformed, cylindrical and is in contact with the seat 16 at the circle arc walls 20, 21. The wedging portions 18 and 19 are not occupied by the elastic body 15.

In figure 3 there is shown the configuration that the anti-jerk element 15 assumes in the presence of a certain torque on the sprocket, for example in the event of acceleration.

In this condition, the element 15 is deformed through the thrust of the pin 14 that is integral with the shaft, driven by the engine of the motorcycle.

The anti-jerk element 15 is wedged into portion 19 of the seat 16 and the pin 14 has an angular shift equal to "a" with respect to the sprocket 12.

In addition to undergoing compression between the wall of the seat 16 and the side surface of the pin 14, the anti-jerk element 15 also undergoes noticeable deformation through sliding due to the angular shift of the pin 14 in the seat.

In fact, the internal layers of the elastic body 15 slide on one another in a tangential direction at the compressed zone between the walls 20, 21 and the pin 14.

This double deformation that the anti-jerk 15 undergoes (compression and sliding) enables energy absorption to be improved in the event of sudden acceleration or braking, thus preventing components of the transmission system from undergoing excessively great mechanical stress.

A greater portion of elastic material of the body 15 is affected by the deformation, increasing the energy that is absorbable by the element 15 in the event of a violent jerk on the sprocket.

In figure 3, as said, there is shown an example of deformation during the acceleration phase, with torque transmitted by the shaft to the sprocket. In the event of a sharp brake, the torque is transmitted by the sprocket to the shaft, and the elastic body 15 will occupy the wedging seat 18, performing the anti-jerk function in a similar manner to the case of acceleration.

It should be noted that by shaping the cam profile of the wedging portions 18 and 19 in a different manner, it is possible to change the angle "a" of angular shift of the pin 14 in the seat, thus varying the deformation behavior of the anti-jerk element so as to adapt to the different needs that may arise. With greater shift angles, absorption of energy in the event of a jerk will be heightened.

It should also be noted that the anti-jerk element could be shaped in conformity to the seat 16 so as to occupy it completely.

Also in this case, owing to the oblong shape of the seat in the tangential direction, it is possible to obtain greater absorption of energy such as to damp in a satisfactory manner a jerk on the sprocket. In fact, the greater the thickness of deformable material in the critical portion of the anti-jerk bush (the one in a tangential direction), the greater will be the energy that is absorbable by the elastic element. The increased yieldability in a tangential direction will furthermore permit a noticeable angular shift of the pin with respect to the seat, with consequent tangential sliding of the layers of the bush on the side of the pin. In a radial direction, there will be no increase in yieldability, as the thickness of the bush has not increased, so satisfactory stability and centering of the sprocket will be maintained.

It is obvious that the objects of the present invention have been achieved.

A motion transmission system has thus been provided that enables the violent jerks to be absorbed in a satisfactory manner that are due to strong and improvised accelerations or decelerations, thus preventing the transmission components from undergoing excessively high mechanical stress. This has enabled a longer working life to be obtained for the transmission components.

Furthermore, owing to the shape of the seat, it is also possible to obtain greater stability of the sprocket position inasmuch as in conditions of great acceleration or braking the shift of the pin with respect to the sprocket to the oblong portion of the seat in a tangential direction ensures solid centering of the sprocket with respect to the rotation axis of the shaft.

Naturally, the description made above of an embodiment applying the innovative principles of the present invention is given by way of example of such innovative principles and must not therefore be taken to limit the legal scope of what is claimed herein.

## Claims

1. Motion transmission system for motor vehicles, comprising a sprocket (12) for transmitting motion between a shaft (13) to which the sprocket is fixed and a circulating element (17) engaged on the periphery of the sprocket, the sprocket being provided with a plurality of axial seats (16), each suitable for receiving an axial pin (14) for fixing the sprocket to the shaft, between each pin and the wall of the respective seat there being interposed an annular elastically deformable anti-jerk element (15) fitted on the pin, **characterized in that** the extent of the seats in a tangential direction with respect to the sprocket is greater than the extent of the seats in a radial direction, each seat being tapered from the center to the periphery of the seat in the tangential directions.

2. Transmission system according to claim 1, **characterized in that** the seat has a generally elliptical shape.

3. Transmission system according to claim 1, **characterized in that** the anti-jerk elements (15) have a circular cylindrical shape.

4. Transmission system according to claim 3, **characterized in that** the seats (16) comprise two circle arc walls (20, 21), that are concentric to one another, arranged on opposite sides of the anti-jerk element (15) in a radial direction and having a radius that is the same as that of the anti-jerk element (15), said two circle arc walls being connected by two concave walls defining two circle-arc shaped portions (18, 19), with a radius that is less than that of the anti-jerk element (15).

5. Transmission system according to claim 1, **characterized in that** the pins (14) are circular cylinders.

6. Transmission system according to claims 4 and 5, **characterized in that** the radius of the circle-arc shaped portions (18, 19) arranged in a tangential direction is greater than the radius of the supporting pin (14).

7. Transmission system according to claim 1, **characterized in that** in a tangential direction with respect to the sprocket the seat has at least a portion (18, 19) that is not occupied by the anti-jerk element in the absence of torque transmitted by the sprocket, said portion (18, 19) being shaped to enable the anti-jerk element (15) to be wedged into the transmission condition of preset torque on the sprocket.

8. Transmission system according to claim 7, **characterized in that** each receiving seat (16) for receiving pins has two portions (18, 19) that are not occupied by the anti-jerk element (15) in the absence of transmitted torque, arranged on opposite sides of the anti-jerk element (15) in a tangential direction with respect to the sprocket (12).

9. Transmission system according to claim 1, **characterized in that** the supporting pins (14) and the seats (16) are spaced regularly along a circumference that is concentric to the sprocket (12).

10. Motion transmission sprocket (12) for transmitting motion between a shaft (13) to which the sprocket is connected and a circulating element (17) engaged on the periphery of the sprocket, provided with a plurality of axial seats (16) each intended to receive an elastically deformable element (15) that is integral with the shaft for fixing the sprocket to the shaft, **characterized in that** the extent of the seat in a tangential direction with respect to the sprocket is greater than the extent of the seat in a radial direction, the seat being tapered from the center to the periphery of the seat in the tangential directions.

11. Sprocket according to claim 10, **characterized in that** the seats are generally elliptic.

12. Sprocket according to claim 10, **characterized in that** each seat (16) comprises two first circle arc walls (20, 21), that are concentric to one another and have the same radius that are arranged in use on opposite sides of the deformable element (15) in a radial direction with respect to the sprocket (12), said two circle arc walls being connected by two further concave walls defining two circle-arc shaped portions (18, 19) with a radius less than that of the first walls.
